# EUROPEAN PATENT SPECIFICATION

(11) **EP 4 092 822 B1**
(45) Date of publication and mention of the grant of the patent: **24.01.2024**
(21) Application number: 22169993.7
(22) Date of filing: 26.04.2022
(51) Int. Cl.: H01M 50/507, H01M 50/519, H01M 50/209, H01M 10/48

(54) **BATTERY PACK**
BATTERIEPACK
BLOC-BATTERIE

(30) Priority: 27.04.2021 JP 2021074528
(43) Date of publication of application: 23.11.2022
(73) Proprietor: Yazaki Corporation, Tokyo (JP)
(72) Inventor: Oga, Tatsuya, Shizuoka, 421-0407 (JP); Mukasa, Hirotaka, Shizuoka, 421-0407 (JP); Fukuchi, Yuta, Shizuoka, 421-0407 (JP); Ichikawa, Yoshiaki, Shizuoka, 421-0407 (JP)
(74) Representative: Grünecker Patent- und Rechtsanwälte PartG mbB

(56) References cited:
- EP-A1- 3 742 523
- US-A1- 2017 271 642
- US-A1- 2018 358 820

## Description

The present invention relates to a battery pack. US 2018/0358820 A1 discloses a monitoring device. The monitoring device includes a first monitoring section that monitors voltages of the plurality of battery cells connected in series and a first wiring section electrically connects the monitoring section and a plurality of battery cells. A first electrode terminal group and a second electrode terminal group in which a plurality of positive terminals and a plurality of negative terminals are aligned and alternate in a longitudinal direction are aligned in a horizontal direction by aligning the plurality of battery cells in the longitudinal direction. The first wiring section is provided with a front wiring section and a back wiring section having a both-end wiring pattern electrically connected to electrode terminals of two battery cells positioned at both ends of the plurality of battery cells aligned in the longitudinal direction and an even-number wiring pattern connected to electrode terminals of even-numbered battery cells in an aligning order.

EP 3 742 523 A1 describes a conductive module. The conductive module includes a plurality of conductive terminal connection components for electrical connection with an electrode terminal, a conductive component that electrically connects a battery cell and an electrical connection target, and an electrical connection structure for each terminal connection component that electrically connects the terminal connection component and the conductive component. The conductive component includes a conductor for each terminal connection component formed using a dissimilar metal material which is a different type from the terminal connection component. The electrical connection structure is formed using a similar metal material which is the same type as the conductor.

US 2017/0271642 A1 discloses a cell contact-making system for an electrochemical device that includes a plurality of electrochemical cells. The cell contact-making system includes a signal conductor system having one or more signal conductors for electrically conductively connecting a signal source to a signal conductor terminal connector or to a monitoring arrangement of the electrochemical device, wherein the signal conductor system includes at least one flexible printed circuit, wherein the flexible printed circuit includes at least one flexible insulating film and at least one conductor track that is arranged on the insulating film.

Conventionally, in a vehicle (an electric vehicle, a hybrid vehicle, or the like) that uses a rotating machine as a driving source, a battery pack including a battery module that supplies power to the rotating machine, and a conductive module electrically connected to a plurality of battery cells that form the battery module is mounted. For example, the conductive module causes a battery monitoring unit to monitor the battery status of the battery cells, by electrically connecting the battery cells and the battery monitoring unit. For example, JP 2018 - 026 311 A discloses such a conductive module that uses a conductive part (flexible printed circuit board and the like) provided with a flat laminated body formed of a plurality of conductors and an insulator.

In recent years, to improve the electricity consumption and to extend the cruising range of vehicles, an improvement in the energy density of a battery pack is sought after. Thus, in the battery pack, an increase in the size of the battery pack due to an increase in the energy density of battery cells has become a matter of concern, and a reduction in the size of the battery pack is also sought after to improve the mountability to a vehicle. A reduction in the size of the conductive module is also sought after without exception.

It is an object of the present invention is to provide a battery pack capable of reducing the size. According to the present invention said object is solved by a battery pack having the features of the independent claim 1.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a plan view illustrating a conductive module;
FIG. 2 is a partially enlarged plan view of a first conductive part and the surrounding components;
FIG. 3 is a partially enlarged plan view of a second conductive part and the surrounding components;
FIG. 4 is a perspective view illustrating a battery pack of the embodiment; and
FIG. 5 is a perspective view illustrating the battery modules including a plurality of battery cells.

### DETAILED DESCRIPTION OF THE PREFERRED EMBODIMENTS

Hereinafter, an embodiment of a battery pack according to the present invention will be described in detail with reference to the accompanying drawings.

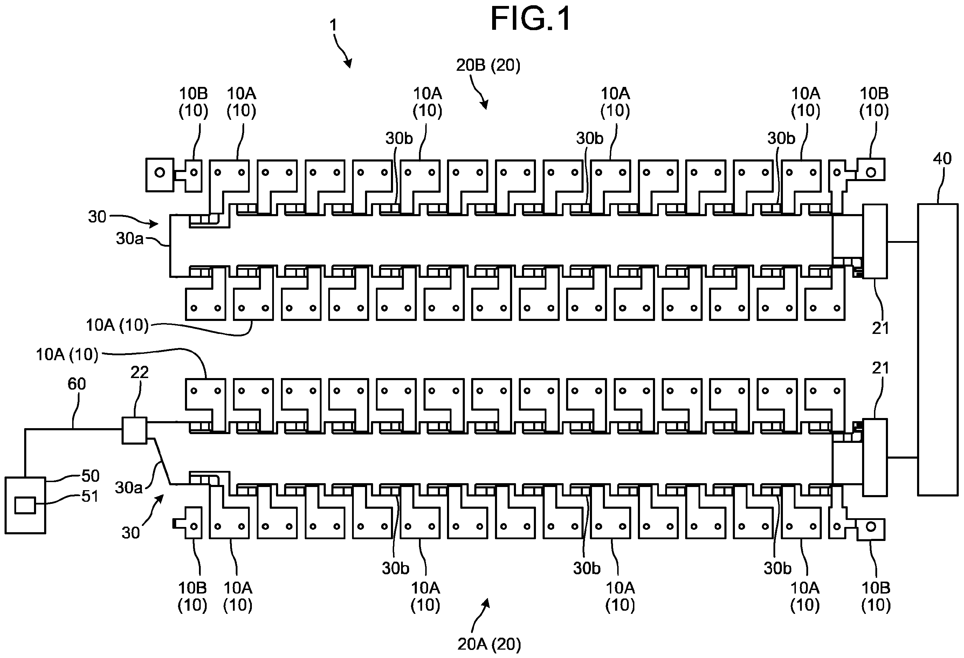

The battery pack of the present invention will be described with reference to FIG. 1 to FIG. 5.

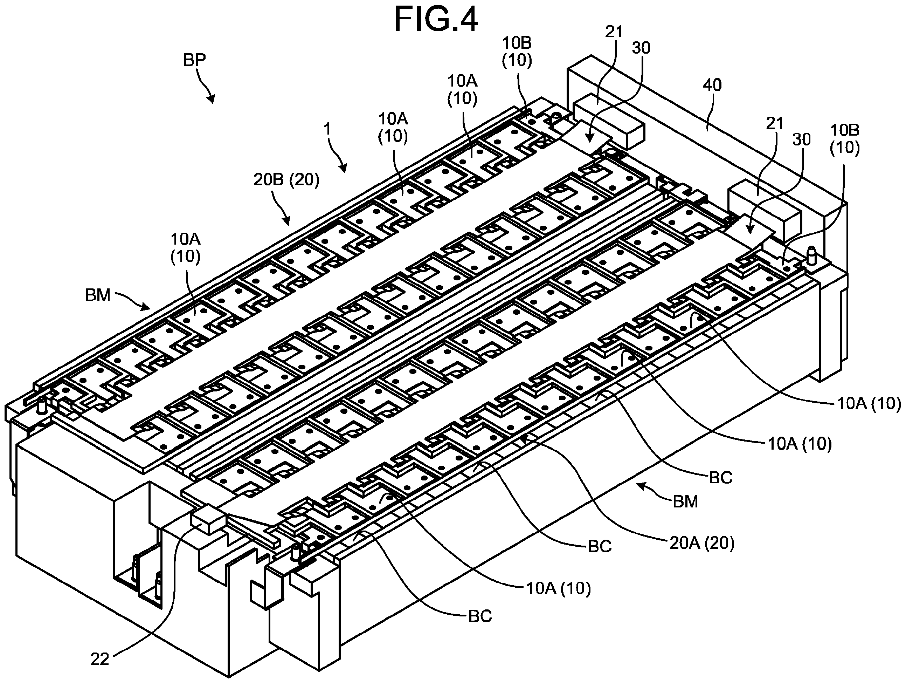

The reference numeral 1 in FIG. 1 to FIG. 4 indicates a conductive module in the present embodiment. A conductive module 1 is assembled to a battery module BM to form a battery pack BP with the battery module BM (FIG. 4). The battery pack BP is to be mounted on a vehicle (an electric vehicle, a hybrid vehicle, or the like) including a rotating machine as a driving source, and is used to supply power to the rotating machine and the like.

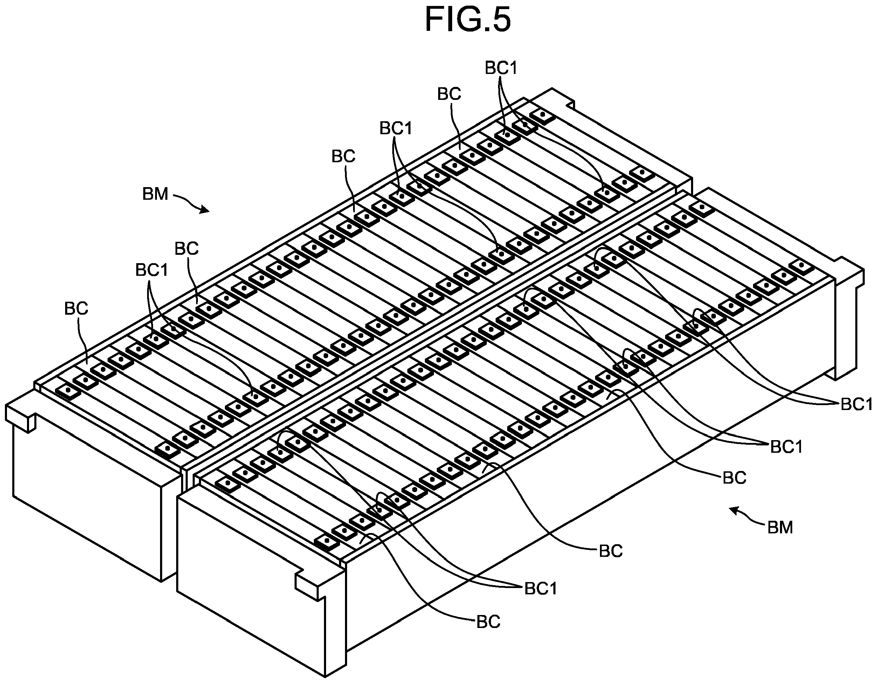

The battery module BM includes a plurality of battery cells BC arranged in an arrangement direction (FIG. 4 and FIG. 5). Each of the battery cells BC has two electrode terminals BC1 (FIG. 5). Each of the electrode terminals BC1 is disposed in a state of being exposed to the outside, with one of the electrode terminals BC1 serving as a positive electrode and the other electrode terminal BC1 serving as a negative electrode. In the battery cell BC illustrated in this example, the housing is formed in a cuboid shape, and on one of six outer wall surfaces of the housing, each electrode terminal BC1 is arranged at intervals in an orthogonal direction with respect to the arrangement direction of each battery cell BC. Moreover, each electrode terminal BC1 illustrated in this example is formed in a plate shape having a plane surface parallel to the outer wall surface of the housing. A terminal connection part 10 serving as a conductor member, which will be described below, is physically and electrically connected to one of the plane surfaces.

The battery cells BC are arranged side by side in one direction, with one of the electrode terminals BC1 and the other electrode terminal BC1 arranged side by side in a line. Thus, in the battery module BM, there are two electrode terminal groups including the electrode terminals BC1 arranged side by side in a line (FIG. 1 and FIG. 6). In the following, unless otherwise specified, the term "arrangement direction" refers to the arrangement direction of the battery cells BC and the arrangement direction of the electrode terminals BC1 in each electrode terminal group.

In the battery module BM, for each electrode terminal group, the battery cells BC are connected in series or parallel, when the electrode terminals BC1 are electrically connected in a predetermined combination by a terminal connection part. In the battery module BM illustrated in this example, in each electrode terminal group, the electrode terminals BC1 that are adjacent to each other in the arrangement direction are electrically connected by the terminal connection part 10, which will be described below. Moreover, in the battery module BM illustrated in this example, there are two electrode terminals BC1 that are not connected by the terminal connection part 10, and one of such electrode terminals BC1 is a total positive electrode, and the other electrode terminal BC1 is a total negative electrode.

The battery pack BP includes at least one battery module BM. The conductive module 1 is assembled to the battery module BM provided in the battery pack BP, and is electrically connected to each of the battery cells BC of the battery module BM. The battery pack BP illustrated in this example includes two battery modules BM. Then, the two battery modules BM are arranged side by side in the arrangement direction of the positive and negative electrode terminals BC1 of the battery cells BC. Therefore, the conductive module 1 illustrated in this example is assembled to the two battery modules BM, and electrically connected to each of the battery cells BC of each of the battery modules BM.

First, the conductive module 1 includes the conductor member (hereinafter referred to as the "terminal connection part") 10 to be electrically connected to the electrode terminal BC1 of each battery cell BC (FIG. 1 to FIG. 4). Furthermore, the conductive module 1 includes a conductive part 20 to be mounted on the battery module BM (FIG. 1 to FIG. 4). In the case where the battery pack BP includes a plurality of the battery modules BM, the conductive module 1 includes a plurality of the terminal connection parts 10 corresponding to the battery cells BC of all the battery modules BM, and includes the conductive part 20 for each of the battery modules BM.

As the terminal connection part 10, the conductive module 1 includes a first terminal connection part 10A that is a connection part configured to electrically connect the electrode terminals BC1 of the battery cells BC adjacent to each other in the arrangement direction, and that is provided for each combination of two adjacent electrode terminals BC1 arranged in the arrangement direction (FIG. 1 to FIG. 4). Furthermore, as the terminal connection part 10, the conductive module 1 includes a second terminal connection part 10B for the total electrode (FIG. 1 to FIG. 4). There are two types of the second terminal connection part 10B: one that is to be electrically connected to the electrode terminal BC1 serving as the total positive electrode, and one that is to be electrically connected to the electrode terminal BC1 serving as the total negative electrode.

The terminal connection part 10 (10A, 10B) is formed of a conductive material such as metal. The terminal connection part 10 is what is called a bus bar formed of a metal plate as a base material, and the main body is formed in a substantially rectangular flat plate shape. The terminal connection part 10 illustrated in this example is welded (laser welded or the like) to one of the plane surfaces of the electrode terminal BC1, and thus the terminal connection part 10 is physically and electrically connected to the electrode terminal BC1. For example, the first terminal connection part 10A is welded to each of the electrode terminals BC1 adjacent to each other in the arrangement direction. On the other hand, the second terminal connection part 10B is welded to one electrode terminal BC1 to be connected.

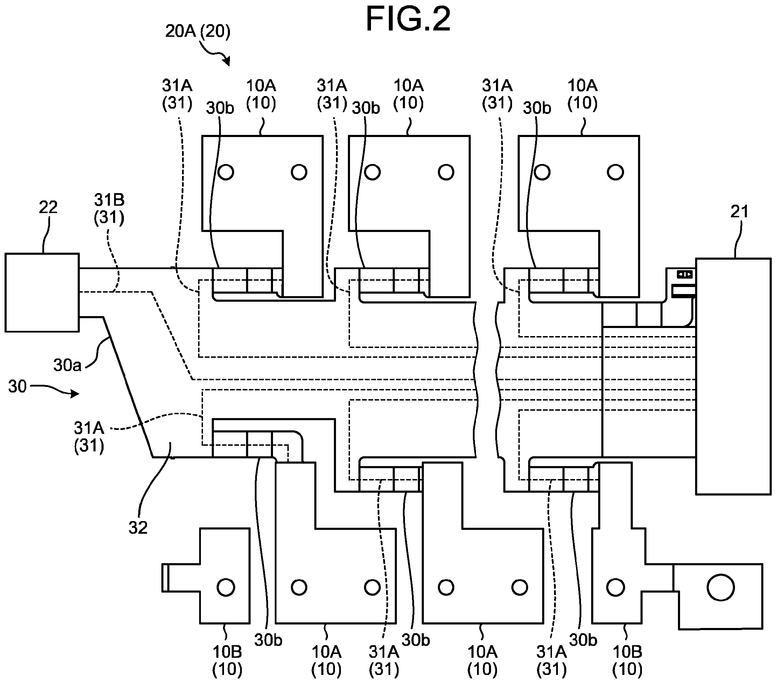

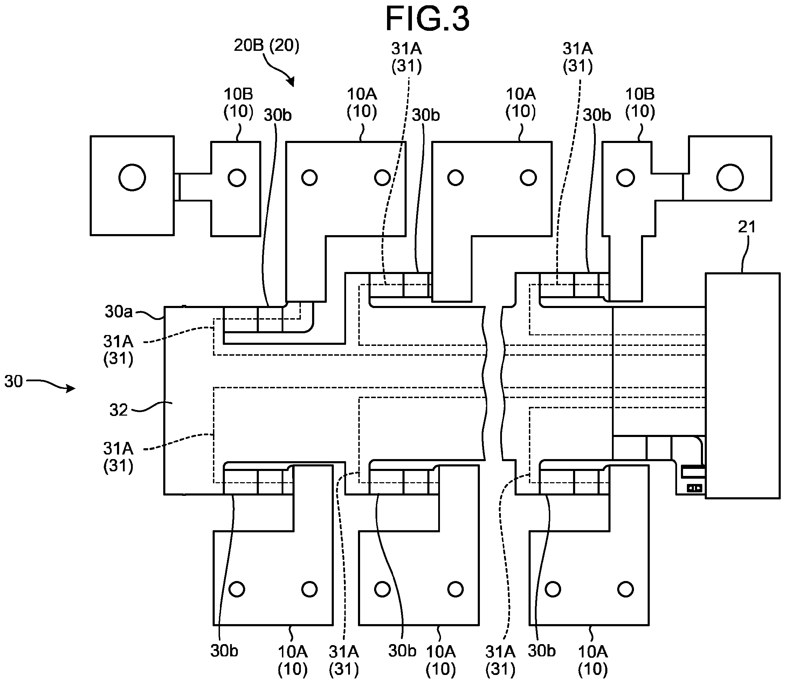

The conductive part 20 includes a flat laminated body 30 formed of a plurality of conductors 31 and an insulator 32 having flexibility (FIG. 2 and FIG. 3). In the laminated body 30, a circuit pattern is formed by the conductors 31, and the conductors 31 are covered by the insulator 32. Any type of laminated body 30 may be used as long as the laminated body 30 has such a configuration. The laminated body 30 illustrated in this example is a flexible printed circuit board (what is called an FPC).

The laminated body 30 has a main body 30a formed in a rectangular sheet shape, and a branch body 30b branched from the main body 30a (FIG. 1 to FIG. 3). The main body 30a is formed in a rectangular shape in which the side parts at both ends in the arrangement direction are short sides, and the side parts at both ends in the orthogonal direction with respect to the arrangement direction are long sides. In the main body 30a, the conductors 31 (a first conductor 31A and a second conductor 31B, which will be described below) are covered by the insulator 32. On the other hand, the branch body 30b is provided for each first conductor 31A, which will be described below. The branch body 30b is branched from each of the long sides of the main body 30a. In the branch body 30b, the first conductor 31A is covered by the insulator 32, and a part of the first conductor 31A is exposed from the insulator 32.

As the conductor 31, the laminated body 30 includes the first conductor 31A that is configured to electrically connect the battery cells BC to a battery monitoring unit 40 (FIG. 1 and FIG. 4).

The battery monitoring unit 40 is a device for monitoring the battery status (voltage, current, temperature, and the like) of the battery cells BC. For example, in the case where the battery pack BP includes the battery modules BM, the battery monitoring unit 40 monitors the battery status of each battery cell BC of all the battery modules BM. The battery monitoring unit 40 illustrated in this example monitors the battery status of each battery cell BC of the two battery modules BM. Then, the battery monitoring unit 40 illustrated in this example is assembled to the side wall of the battery module group formed of the two battery modules BM. In this example, in the battery module group, the battery monitoring unit 40 is assembled to one of the side walls in the arrangement direction of the battery cells BC.

For example, the first conductor 31A is provided for each terminal connection part 10 in the conductive part 20. Each of a plurality of the first conductors 31A is formed from the main body 30a to the branch body 30b for each terminal connection part 10. Then, the first conductor 31A is physically and electrically connected to the terminal connection part 10. For example, the first conductor 31A is physically and electrically connected to the terminal connection part 10, by soldering the exposed portion of the branch body 30b to the terminal connection part 10.

The conductive part 20 includes a first connector 21 that is configured to electrically connect the first conductor 31A to the battery monitoring unit 40 (FIG. 1 to FIG. 4). The first connector 21 is assembled to the side part of the main body 30a of the laminated body 30. In the main body 30a, the first connector 21 illustrated in this example is assembled to the side part, which is one of the short sides at the side where the battery monitoring unit 40 is disposed. Moreover, the first connector 21 is fitted and connected to a counterpart connector (not illustrated) of the battery monitoring unit 40. This first connector 21 includes a terminal metal fitting (not illustrated) for each first conductor 31A of the laminated body 30, and the terminal metal fitting is fitted and connected to a counterpart terminal metal fitting for the first conductor 31A (not illustrated) of the counterpart connector. The battery monitoring unit 40 illustrated in this example includes a counterpart connector for each conductive part 20.

In this example, in the case where the battery pack BP includes only one battery module BM, the conductive module 1 includes only one conductive part 20 corresponding to the battery module BM. In this case, as the conductor 31, the laminated body 30 includes the second conductor 31B that is configured to electrically connect the battery monitoring unit 40 to electrical equipment 51 (FIG. 1) housed in an external electrical connection box 50.

For example, the electrical connection box 50 houses various types of electrical equipment 51 such as an electronic control device that controls braking and driving force of a vehicle or the like, and an electrical connection member such as a bus bar (not illustrated). Then, for example, the electrical connection box 50 is fixed to the body of a vehicle or the like. For example, the electrical equipment 51 serving as an electronic control device controls the driving force of a rotating machine of the vehicle, based on a detection signal of the battery status of the battery cells BC transmitted from the battery monitoring unit 40 via the second conductor 31B.

The second conductor 31B is formed from the side part, which is one of the short sides of the main body 30a, to the side part, which is the other short side of the main body 30a. For example, in this case, the laminated body 30 includes a circuit pattern layer having all the first conductors 31A, a circuit pattern layer having the second conductor 31B, an insulator layer between the two circuit pattern layers, and two insulator layers sandwiching these three layers from each circuit pattern layer side.

The second conductor 31B is electrically connected to the battery monitoring unit 40 via the first connector 21. Therefore, the first connector 21 also includes a terminal metal fitting for the second conductor 31B (not illustrated), and the terminal metal fitting is fitted and connected to a counterpart terminal metal fitting for the second conductor 31B (not illustrated) in the counterpart connector of the battery monitoring unit 40.

Furthermore, in this case, the conductive part 20 includes a second connector 22 that is configured to electrically connect the second conductor 31B to the electrical equipment 51 (FIG. 1, FIG. 2, and FIG. 4). This second connector 22 is assembled to the side part of the main body 30a of the laminated body 30. In the main body 30a, the second connector 22 illustrated in this example is assembled to the side part, which is the other short side opposite to the side where the battery monitoring unit 40 is disposed. Moreover, the second connector 22 is fitted and connected to the counterpart connector (not illustrated) disposed on the electrical connection box 50 side. The second connector 22 includes a terminal metal fitting for the second conductor 31B (not illustrated), and the terminal metal fitting is fitted and connected to the counterpart terminal metal fitting for the second conductor 31B (not illustrated) in the counterpart connector on the electrical connection box 50 side.

For example, between the conductive module 1 and the electrical equipment 51, there is an electrical connection tool 60 configured to electrically connect the conductive module 1 and the electrical equipment 51 (FIG. 1). For example, although not illustrated, the electrical connection tool 60 includes an electric wire and connectors fixed to both ends of the electric wire, and one of the connectors is used as a counterpart connector on the electrical connection box 50 side, and the other connector is fitted and connected to the connector (not illustrated) of the electrical equipment 51. Consequently, the second conductor 31B is electrically connected to the electrical equipment 51.

In the non-inventive case where a single battery module BM as described above is provided, the conductive module 1, the electrical connection box 50, and the electrical connection tool 60 form a conductive system that detects the battery status information of the battery cells BC of the single battery module BM and that transmits the battery status information to the electrical equipment 51. The conductive system may also include the battery monitoring unit 40 as a component of the system.

Subsequently, in the case where the battery pack BP includes a plurality of the battery modules BM, as described above, the conductive module 1 includes the conductive part 20 for each of the battery modules BM.

In this case, one of a plurality of the conductive parts 20 (hereinafter referred to as a "first conductive part 20A") is configured the same as the conductive part 20 that includes the second conductor 31B and the second connector 22 as in the above-described example (FIG. 1 and FIG. 2). In other words, the first conductive part 20A includes the first conductor 31A for each terminal connection part 10 corresponding to the battery cell BC of the battery module BM to which the first conductive part 20A is assembled, the second conductor 31B that is configured to electrically connect the battery monitoring unit 40 to the electrical equipment 51 of the electrical connection box 50, the first connector 21 that electrically connects all the first conductors 31A and the second conductor 31B to the battery monitoring unit 40, and the second connector 22 that is configured to electrically connect the second conductor 31B to the electrical equipment 51 via the electrical connection tool 60.

On the other hand, the remaining of the conductive parts 20 (hereinafter referred to as a "second conductive part 20B") includes the first conductor 31A for each terminal connection part 10 corresponding to the battery cell BC of the battery module BM to which the second conductive part 20B is assembled, and the first connector 21 that is configured to electrically connect all the first conductors 31A to the battery monitoring unit 40 (FIG. 1 and FIG. 3).

In the case where a plurality of the battery modules BM as described above are provided, the conductive module 1, the electrical connection box 50, and the electrical connection tool 60 form a conductive system that detects the battery status information of the battery cells BC of the battery modules BM and that transmits the battery status information to the electrical equipment 51. The conductive system may also include the battery monitoring unit 40 as a component of the system.

As described above, in the conductive module 1 and the conductive system of the present embodiment, not only the first conductor 31A that is configured to electrically connect the battery cells BC and the battery monitoring unit 40, but also the second conductor 31B that is configured to electrically connect the battery monitoring unit 40 to the electrical equipment 51 of the electrical connection box 50 is provided as the conductor 31 of the conductive part 20 (first conductive part 20A). Then, in the conductive module 1 and the conductive system, the first conductor 31A and the second conductor 31B are electrically connected to the counterpart connector of the battery monitoring unit 40 via the first connector 21, and the second conductor 31B is electrically connected to the counterpart connector on the electrical connection box 50 side via the second connector 22. Thus, the conductive module 1 and the conductive system do not need to arrange a conductor such as an electric wire that is configured to electrically connect the battery monitoring unit 40 and the electrical equipment 51 of the electrical connection box 50 on a path different from that of the conductive part 20. Consequently, it is possible to reduce the size. Furthermore, because the conductive module 1 and the conductive system do not require a connector dedicated to the conductor, there is no need to prepare a counterpart connector in the battery monitoring unit 40 to fit and connect the connector. Consequently, it is also possible to reduce the size of the battery monitoring unit 40. Thus, the conductive module 1 and the conductive system of the present embodiment can reduce the size of the battery pack BP, by reducing the size of the conductive module 1 and the conductive system, and reducing the size of the battery monitoring unit 40. Consequently, it is possible to improve the mountability of the battery pack BP to a vehicle.

## Claims

1. A battery pack, comprising:
a conductive module (1);
a plurality of battery modules (BM):
a plurality of battery cells (BC);
a battery monitoring unit (40);
an electrical connection box (50) in which an electrical equipment (51) is housed; and
an electrical connection tool (60) that electrically connects the conductive module (1) and the electrical equipment (51), wherein
each of the battery modules (BM) includes the plurality of battery cells (BC),
wherein the conductive module (1) includes conductive parts (20), wherein the conductive parts (20) are parts to be mounted on the plurality of the battery modules (BM) in which the plurality of battery cells (BC) are arranged in an arrangement direction, and are provided with a flat laminated body (30) formed of a plurality of conductors (31) and an insulator (32) having flexibility, and a conductive part (20) is provided for each of the battery modules (BM),
wherein the conductive module (1) includes a conductor member (10), wherein the conductive member (10) is a connection part configured to electrically connect a plurality of electrode terminals (BC1) of the plurality of the battery cells (BC) adjacent to each other in the arrangement direction, and is provided for each combination of two adjacent electrode terminals (BC1) arranged in the arrangement direction, wherein
the plurality of conductors (31) comprise first conductors (31A) and a second conductor (31B),
the conductive part (20) includes the first conductors (31A) that are configured to electrically connect the battery cells (BC) to the battery monitoring unit (40) for monitoring a battery status of the battery cells (BC), and includes a first connector (21) that is configured to be fitted and connected to a counterpart connector of the battery monitoring unit (40) and is configured to electrically connect the first conductor (31A) to the battery monitoring unit (40), and
only one of the conductive parts (20) includes the second conductor (31B) that is configured to electrically connect the battery monitoring unit (40) to the electrical equipment (51) via the electrical connection tool (60), includes a second connector (22) that is configured to be fitted and connected to a counterpart connector disposed on the electrical connection box (50) side of the electrical connection tool (60) and is configured to electrically connect the second conductor (31B) to the electrical equipment (51), and is configured to electrically connect the second conductor (31B) to the battery monitoring unit (40) via the first connector (21) provided in said conductive part (20), wherein
the first conductors (31A) are provided for each conductor member (10) and the laminated body (30) is a flexible printed circuit board.

## Patentansprüche

1. Ein Batteriepack, aufweisend:
ein leitfähiges Modul (1);
eine Vielzahl von Batteriemodulen (BM);
eine Vielzahl von Batteriezellen (BC);
eine Batterieüberwachungseinheit (40);
einen elektrischen Anschlusskasten (50), in dem eine elektrische Ausrüstung (51) untergebracht ist; und
ein elektrisches Verbindungswerkzeug (60), das das leitfähige Modul (1) und die elektrische Ausrüstung (51) elektrisch verbindet, wobei
jedes der Batteriemodule (BM ) die Vielzahl von Batteriezellen (BC) aufweist,
wobei das leitfähige Modul (1) leitende Teile (20) hat, wobei die leitenden Teile (20) Teile sind die an der Vielzahl der Batteriemodulen (BM) anzubringen sind in denen die Vielzahl von Batteriezellen (BC) in einer Anordnungsrichtung angeordnet sind, und die mit einem flachen laminierten Körper (30) versehen sind, der aus einer Vielzahl von Leitern (31) und einem Isolator (32) mit Flexibilität besteht, und
ein leitender Teil (20) für jedes der Batteriemodule (BM) vorhanden ist,
wobei das leitfähige Modul (1) ein Leiterglied (10) hat, wobei das Leiterglied (10) ein Verbindungsteil ist das konfiguriert ist elektrisch eine Vielzahl von Elektrodenanschlüssen (BC1) der Vielzahl der Batteriezellen (BC) nebeneinander in der Anordnungsrichtung zu verbinden, und vorhanden ist für jede Kombination von zwei nebeneinanderliegenden Elektrodenanschlüssen (BC1), die in der Anordnungsrichtung angeordnet sind, wobei
die Vielzahl von Leitern (31) erste Leiter (31A) und einen zweiten Leiter (31B) umfasst, der leitende Teil (20) umfasst die ersten Leiter (31A) die konfiguriert sind die Batteriezellen (BC) elektrisch mit der Batterieüberwachungseinheit (40) zu verbinden, um einen Batteriestatus der Batteriezellen (BC) zu überwachen, und
umfasst einen ersten Verbinder (21), der so konfiguriert ist, dass er mit einem Gegenstecker der Batterieüberwachungseinheit (40) gepasst und verbunden werden kann, und
der so konfiguriert ist, dass er den ersten Leiter (31A) elektrisch mit der Batterieüberwachungseinheit (40) verbindet, und
nur eines der leitenden Teile (20) den zweiten Leiter (31B) umfasst, der dazu konfiguriert ist, die Batterieüberwachungseinheit (40) über das elektrische Verbindungswerkzeug (60) elektrisch mit der elektrischen Ausrüstung (51) zu verbinden,
einen zweiten Verbinder (22) beinhaltet, der so konfiguriert ist, dass er an einen Gegenverbinder, vorgesehen an der elektrischen Anschlusskasten (50) Seite des elektrischen Verbindungswerkzeugs (60), verbunden und angeschlossen werden kann, und der so konfiguriert ist, dass er den zweiten Leiter (31B) elektrisch mit der elektrischen Ausrüstung ( 51) verbindet, und konfiguriert ist den zweiten Leiter (31B) elektrisch mit der Batterieüberwachungseinheit (40) über den ersten Verbinder (21), der in dem leitenden Teil (20) vorgesehen ist, zu verbinden, wobei
die ersten Leiter (31A) für jedes Leiterglied (10) vorhanden sind und der laminierte Körper (30) eine flexible gedruckte Leiterplatte ist.

## Revendications

1. Bloc-batterie, comprenant :
un module conducteur (1) ;
une pluralité de modules de batterie (BM) ;
une pluralité d'éléments de batterie (BC) ;
une unité de surveillance de batterie (40) ;
un boîtier de connexion électrique (50) dans lequel est logé un équipement électrique (51) ; et
un outil de connexion électrique (60) qui connecte électriquement le module conducteur (1) et l'équipement électrique (51), dans lequel
chacun des modules de batterie (BM) comprend la pluralité d'éléments de batterie (BC),
dans lequel le module conducteur (1) comprend des parties conductrices (20), dans lequel les parties conductrices (20) sont des parties à monter sur la pluralité de modules de batterie (BM) dans lesquels la pluralité d'éléments de batterie (BC) sont agencés dans une direction d'agencement, et sont pourvues d'un corps stratifié plat (30) formé d'une pluralité de conducteurs (31) et d'un isolant (32) ayant une flexibilité, et une partie conductrice (20) est prévue pour chacun des modules de batterie (BM),
dans lequel le module conducteur (1) comprend un organe conducteur (10), dans lequel l'organe conducteur (10) est une partie de connexion configurée pour connecter électriquement une pluralité de bornes d'électrode (BC1) de la pluralité d'éléments de batterie (BC) adjacentes les unes aux autres dans la direction d'agencement, et est prévu pour chaque combinaison de deux bornes d'électrode adjacentes (BC1) agencées dans la direction d'agencement, dans lequel
la pluralité de conducteurs (31) comprend des premiers conducteurs (31A) et un deuxième conducteur (31B),
la partie conductrice (20) comprend les premiers conducteurs (31A) qui sont configurés pour connecter électriquement les éléments de batterie (BC) à l'unité de surveillance de batterie (40) pour surveiller un état de batterie des éléments de batterie (BC), et comprend un premier un connecteur (21) qui est configuré pour être ajusté et connecté à un connecteur homologue de l'unité de surveillance de batterie (40) et est configuré pour connecter électriquement le premier conducteur (31A) à l'unité de surveillance de batterie (40), et
seule l'une des parties conductrices (20) comprend le deuxième conducteur (31B) qui est configuré pour connecter électriquement l'unité de surveillance de batterie (40) à l'équipement électrique (51) via l'outil de connexion électrique (60), comprend un deuxième connecteur (22) qui est configuré pour être ajusté et connecté à un connecteur homologue disposé du côté du boîtier de connexion électrique (50) de l'outil de connexion électrique (60) et est configuré pour connecter électriquement le deuxième conducteur (31B) à l'équipement électrique (51), et est configuré pour connecter électriquement le deuxième conducteur (31B) à l'unité de surveillance de batterie (40) via le premier connecteur (21) prévu dans ladite partie conductrice (20), dans lequel
les premiers conducteurs (31A) sont prévus pour chaque organe conducteur (10) et le corps stratifié (30) est une carte de circuit imprimé flexible.
